Europäisches Patentamt

European Patent Office

Office européen des brevets

(19)

(11) Publication number: **0 351 120**
**A2**

(12) **EUROPEAN PATENT APPLICATION**

(21) Application number: **89306753.8**

(22) Date of filing: **29.06.89**

(51) Int. Cl.⁴: **G11B 15/02**

(30) Priority: **15.07.88 GB 8816953**

(43) Date of publication of application:
**17.01.90 Bulletin 90/03**

(84) Designated Contracting States:
**AT BE CH DE ES FR GB GR IT LI LU NL SE**

(71) Applicant: **Ferguson Limited**
**Cambridge House Great Cambridge Road**
**Enfield Middlesex, EN1 1UL(GB)**

(72) Inventor: **Sidery, Peter John Francis**
**36, River Avenue**
**Hoddesdon Hertfordshire(GB)**

(74) Representative: **Fleming, Ian Alexander et al**
**THORN EMI Patents Limited The Quadrangle**
**Westmount Centre Uxbridge Road**
**Hayes Middlesex, UB4 0HB(GB)**

(54) **Recording system.**

(57) In a conventional video tape recorder, when it is programmed to effect automatic recording at a specific subsequent time, the machine automatically adopts the "stand-by" mode in which it awaits the first programmed event to arrive. While in this "stand-by" mode, the machine can no longer be used for any playback or recording operation. The present invention provides controls for a video recorder, the controls comprising programming means to provide automatic operation of the recorder at a specified time, the programming means comprising means to delay putting the recorder into automatic timer-mode until a predetermined time.

FIG.3

EP 0 351 120 A2

## RECORDING SYSTEM

The present invention relates to controls for a recording system, which may be a tape recorder and more particularly a video cassette recorder.

In a conventional video tape recorder, when it is programmed to effect automatic recording at a specified subsequent time, the machine automatically adopts the "stand-by" mode in which it waits for the first programmed event to arrive. While in this "stand-by" mode, the machine can no longer be used for any playback or recording operation. Moreover, the user whose equipment is set up such that the television receiver uses the tuner in the video cassette recorder can no longer do so, without disrupting and losing the automatic-recording setting.

An object of the present invention is to provide controls for a recording system which overcomes this problem.

The present invention provides controls for a recording system, the controls comprising programming means to provide automatic operation of the recorder at a specified time, the programming means comprising means to delay putting the recorder into automatic timer-mode until a predetermined time.

Preferably, the delay means comprises means to set a predetermined time at which the recorder is automatically switched to the timer-mode to provide automatic operation at the specified time.

Additionally or alternatively, the delay means comprises means automatically to effect switching of the recorder to the timer mode at a particular time interval before the specified time, as programmed, for operation of the recorder.

In one advantageous embodiment, having programmed the recorder with the desired event details, the user is given the choice between adopting the timer mode immediately or setting a time at which the recorder will put itself into the timer mode. All the user has to do is to make sure that there will be sufficient non-precious tape in the cassette at record time. This feature can readily be included in existing control software. An enhancement to this invention allows the user to go to a specified point on the tape when the preset timer arm time arrives.

In another embodiment, the controls comprise means to use a second timer to provide an audible or visible warning that it is time to engage the auto-timer. Preferably, the auto-timer is also so arranged that it does not switch the recorder to standby until a few minutes before the programmed time.

In order that the invention may more readily be understood, a description is now given, by way of example only, of the control operations for a video cassette recorder embodying the present invention. References are made to the accompanying drawings of which:

Figure 1 shows the general operation of the TIMER ARM facility and its interaction with the general timer mode.

Figure 2 shows the flow for entering the timer arm time.

Figure 3 is a block diagram of a video cassette recorder system incorporating the TIMER ARM function.

All paths are shown in a generalized format and do not show every feature to enable the video recorder to function as hereafter described.

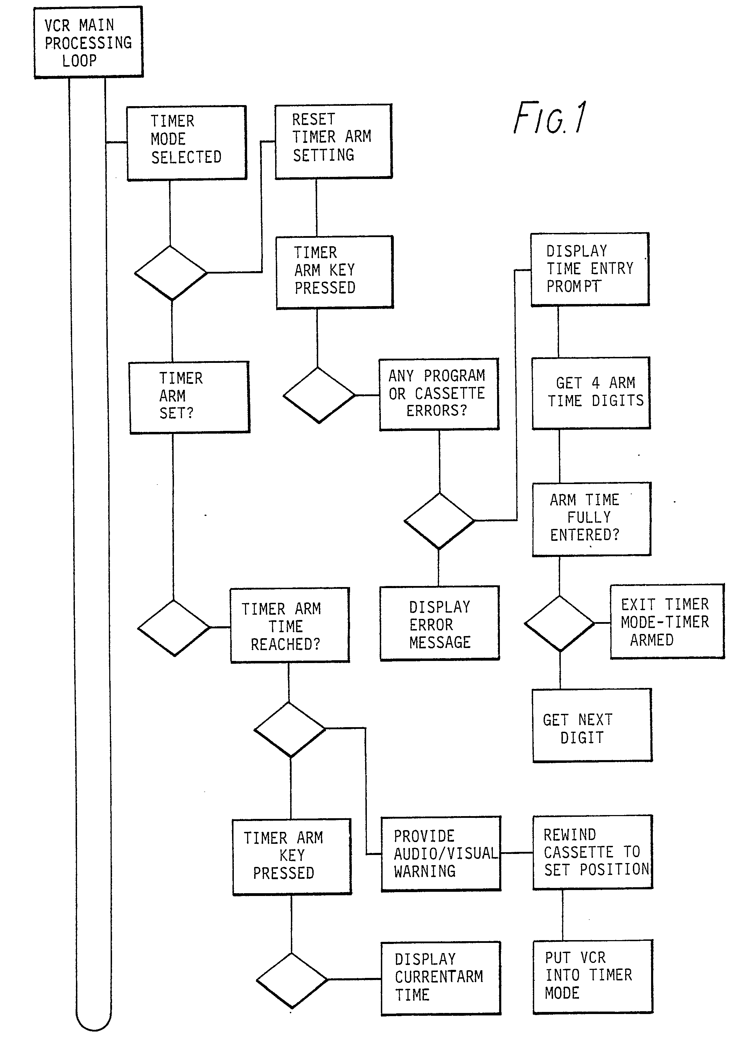

The overall operation of the timer arm facility is shown in Figure 1. Other operations may be incorporated into the general system described but these are conventional and well known and consequently have been omitted in the interests of clarity.

The user must first adopt the timer mode in order to set the arm time. This gives some protection from accidental operation.

In order to preserve the familiar action and response from the timer button, it maintains its present function, that is, toggling between "timer-on" and "timer-off". However, having engaged timer, the user may assume the "timer-arm entry mode" by pressing the "timer arm" key.

In this mode the display will prompt the user to enter the required arm time by flashing the start legend and displaying bars in the time display area, as follows:

"START" --:--

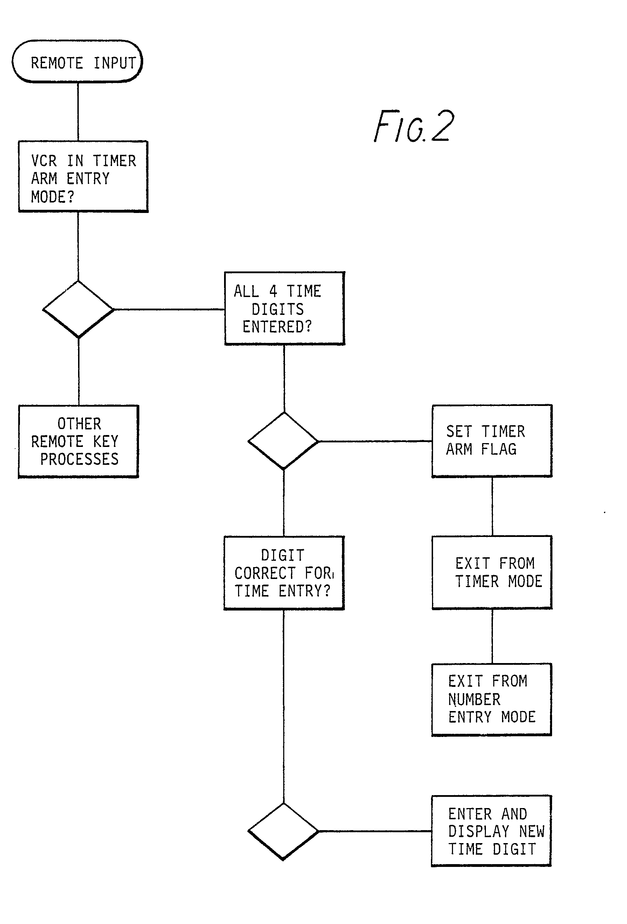

The user then enters the desired timer arm time, which is the time at which he/she wishes the recorder to adopt the true timer-mode. To achieve this, a process similar to that outlined in Figure 2 is performed each time a remote number key is pressed. When a remote number key is pressed and the recorder is in timer arm entry mode the controls are ready to receive the four time digits. The timer arm time is limited to a 24 hour period from arming to execution.

"START" 12:00

Once the time is entered, the recorder will exit from timer mode allowing the recorder to be used in the normal way. The recorder will remind the user that the timer has been armed by periodically flashing up the timer legend in the display. When not in timer mode pressing the timer arm key will show the timer arm time which has previously been set (if any). However, the entered time cannot be deleted or changed except by repeating the entry procedure. If the user re-enters the true timer-mode by pressing the timer key, the timer arm function will be deactivated. Also if the cassette is ejected whilst the timer is armed then the recorder will immediately adopt the true timer-mode and flash the cassette message. The timer cannot be armed if any of the events are misprogrammed, or any two events are overlapped.

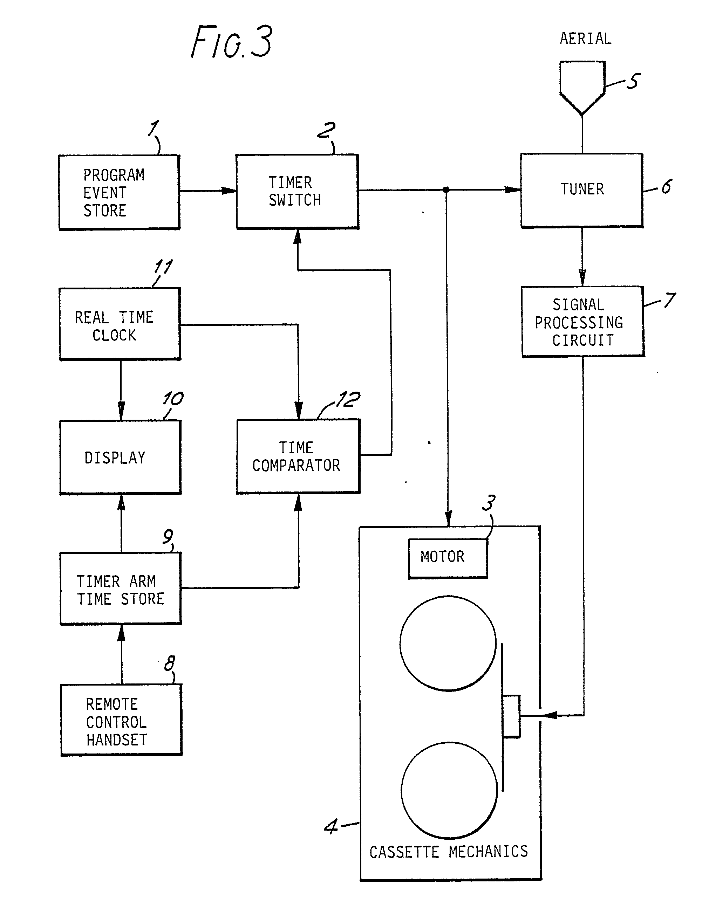

Figure 3 shows how a control system may be incorporated into a conventional recording system which may include the elements 1-7, 10 and 11.

When the timer is engaged on a conventional system, the machine automatically adopts the "stand-by" mode in which it waits for the first programmed event to arrive. This event which comes from the program event store 1 passes through the timer switch 2. This may cause the motor 3 in the cassette mechanics 4 to function and signals picked up by the aerial 5 pass through the tuner 6 to be processed by the signal processing circuitry 7. The processed signal is fed to the cassette and the recording operation has been initiated.

Alternatively, if the the timer has been armed via the remote control handset 8, the arm time is stored in the timer arm time store 9. This time may be indicated on the display 10 which also displays the real time 11. The time stored in the timer arm store 9 is compared to the real time clock 11 via a comparator 12. If the two times correspond, the timer switch is activated and the VCR adopts the timer-mode, awaiting the first programmed event. The recorder has not had to adopt the "stand-by" mode.

This implementation gives the user an additional feature of substantial benefit without radically altering the current event/timer operation in use on recorder machines, other possibilities are as follows:-

1) Instead of entering the arm time, this is taken as the start time of the first event.

2) The recorder adopts timer mode at the start time of the first event without having to arm the timer.

3) The recorder is made to fast wind to a specified point at the time of executing automatic entry to timer mode.

The timer arm feature allows delayed entry into timer mode. This feature can be used to ensure that a pre-programmed event will be recorded without having to remember to engage timer either immediately or sometime prior to the event. Thus all data necessary for the event to be recorded can be entered at one time requiring no further user intervention.

**Claims**

1. Controls for a recording system, the controls comprising programming means to provide automatic operation of the recorder at a specified time, the programming means comprising delay means to delay putting the recorder into automatic timer-mode until a predetermined time.

2. Controls for a recording system according to Claim 1, the delay means comprising means to set a predetermined time at which the recorder is automatically switched to the timer-mode to prove automatic operation at the specified time.

3. Controls for a recording system according to Claims 1 or 2, the delay means comprising means automatically to effect switching of the recorder to the timer-mode at a particular time interval before the specified time, as programmed, for operation of the recorder.

4. Controls for a recording system according to Claims 1, 2 or 3, comprising means to enable the recording system to fast wind to a specified point at the time of executing automatic entry to timer-mode.

5. Controls for a recording system according to Claims 1, 2, or 3, comprising means to use a second timer to provide an audible or visible warning that it is time to execute automatic entry to timer-mode.

6. Controls for a recording system according to Claims 1, 2 or 3 comprising means for causing the recorder to indicate that there is no cassette in the recorder when the cassette is ejected whilst the delay means is in operation.

7. Controls for a recording system according to Claims 1, 2, or 3 comprising means arranged to prevent the delay means being put into operation if programmed events are not programmed correctly.

8. Controls for a recording system according to Claims 1, 2, or 3 comprising means for deactivating the delay means.

9. Controls for a recording system the control being according to any of the above Claims, wherein the recording system is a video recorder.

FIG.1

*FIG.2*

```
        ┌─────────────────┐
        │  REMOTE INPUT   │
        └────────┬────────┘
                 │
        ┌────────┴────────┐
        │  VCR IN TIMER   │
        │  ARM ENTRY      │
        │  MODE?          │
        └────────┬────────┘
                 │
               ◇─────────────────────┐  ┌─────────────────┐
               │                      │  │  ALL 4 TIME     │
               │                      └──│  DIGITS         │
               │                         │  ENTERED?       │
        ┌──────┴──────┐                  └────────┬────────┘
        │  OTHER      │                           │
        │  REMOTE KEY │                         ◇──────────────┐  ┌──────────────┐
        │  PROCESSES  │                         │              │  │  SET TIMER   │
        └─────────────┘                         │              └──│  ARM FLAG    │
                                                │                 └──────┬───────┘
                                         ┌──────┴───────┐                │
                                         │  DIGIT       │         ┌──────┴───────┐
                                         │  CORRECT FOR │         │  EXIT FROM   │
                                         │  TIME ENTRY? │         │  TIMER MODE  │
                                         └──────┬───────┘         └──────┬───────┘
                                                │                        │
                                                │                 ┌──────┴───────┐
                                                │                 │  EXIT FROM   │
                                                │                 │  NUMBER      │
                                                │                 │  ENTRY MODE  │
                                                │                 └──────────────┘
                                              ◇──────────────┐  ┌──────────────┐
                                              │              │  │  ENTER AND   │
                                              │              └──│  DISPLAY NEW │
                                              │                 │  TIME DIGIT  │
                                                                └──────────────┘
```

# FIG.3

AERIAL

| PROGRAM EVENT STORE | → | TIMER SWITCH | → | TUNER |

Blocks: PROGRAM EVENT STORE (1), TIMER SWITCH (2), TUNER (6), AERIAL (5), SIGNAL PROCESSING CIRCUIT (7), REAL TIME CLOCK (11), DISPLAY (10), TIME COMPARATOR (12), TIMER ARM TIME STORE (9), REMOTE CONTROL HANDSET (8), MOTOR (3), CASSETTE MECHANICS (4)